# EUROPEAN PATENT APPLICATION

(11) **EP 1 349 346 A2**
(43) Date of publication of application: **01.10.2003**
(21) Application number: 03290489.8
(22) Date of filing: 28.02.2003
(51) Int. Cl.: H04L 29/06

(54) **Authenticated file loader**

(30) Priority: 01.03.2002 US 85113
(71) Applicant: Alcatel Canada Inc., Kanata, Ontario K2K 2E6 (CA)
(72) Inventor: Howard, Brett, Nepean, Ontario K2H 6K3 (CA)
(74) Representative: Feray, Valérie

(57) **Abstract**

System and method of providing authentication of files downloaded from a source to an embedded system are described. The files or other digital data is combined with a header that includes target state information. The target state information is typically identification information such as target address or data revision levels. The embedded system verifies the target state information before uploading the files or digital data. The header may also include a digital signature as a further authentication measure.

## Description

### Field of the Invention

This invention relates to embedded systems and more particularly to techniques for providing digital data to an embedded system in a secure manner.

### Background

Embedded systems occasionally require that files be uploaded for operations such as configuration, data or firmware updates. In such systems there is usually a need to ensure that the digital file or updates arrive in tact at the intended embedded system. Otherwise, there is a potential security weakness.

One example of the known prior art relies on traditional methods of integrity and authentication. For example, an operator might authenticate him/herself before being granted access to a console. The file is then uploaded, possibly with a check sum or a cyclic -redundancy-check (CRC) as an integrity check. It is then the operator's responsibility to assure that the file is applicable in the context of the application.

Prior art also exists wherein a software security package provides a digital signature software code (executables, Java, applets, etc.). One such system is described in published PCT Application WO 99/56196 published November 4, 1999 in the name Shostack, wherein a client-server based system provides, automatically, updates of information files or software enhancements to end users. Digital signatures or other cryptography techniques are used to provide integrity and authenticity of the software enhancements. As an enhancement becomes available, a push mechanism on the server in real time takes the enhancement and sends it to clients via electronic mail. An installer mechanism on the client performs authenticity checks before installing the received enhancements. These authenticity checks include a file name match and a digital signature verification. The introduction of digital signal generation and verification establishes an algorithm appropriate for applications requiring a digital rather than written signature. A digital signature is typically a large number represented in a computer as strings of binary digits. This algorithm provides the capability to generate and verify signatures. Signature generation makes use of a private key to generate a digital signature. Signature verification makes use of a public key that corresponds to, but is not the same as, the private key. Each user possesses a private and public key pair. Public keys are assumed to be known to the public in general, private keys are never shared. Anyone can verify the signature of a user by employing that user's public key. Signature generation can be performed only by the possessor of the user's private key. The problem with the known prior art solutions is that the end user or embedded system has no knowledge of the appropriateness of the uploaded file within its context. For example, a configuration file may be uploaded to the wrong device or to one with an old code revision that cannot parse the file. Additionally, the file must be adequately safe guarded against an attacker intent on deceiving the system. It is well known that hackers have numerous techniques of gaining unwanted access to computer systems.

### Summary of the Invention

The present invention is an advance on the prior art in that it provides the notion of a target header as part of the software file to be installed. More particularly, the target header defines the end environment. Therefore, according to the present solution an additional header is combined with the digital data file wherein the header has at least one critical extension. The extension is at least a target state and may also include a digital signature.

Therefore, in accordance with a first aspect of the present invention there is provided a method of providing digital data from a source system to an embedded system in a secure manner, comprising the steps of: combining the data with header information including a target identifier corresponding to the embedded system; providing the combined digital data with header information to the embedded system; and verifying the target identifier before the embedded system is enabled to load the digital data.

In accordance with a second aspect of the present invention there is provided a method of providing digital data from a source system to an embedded system in a secure manner, comprising the steps of: combining the data with header information including a target identifier corresponding to the embedded system; signing the combined digital data with header information with a digital signature corresponding to the source system, the digital signature being added to the header information providing the combined digital data with header information to the embedded system; and verifying the digital signature and the target identifier before the embedded system is enabled to load the digital data.

In this aspect of the invention the source system generates a digital signature using the issuer's private key and the embedded system verifies the digital signature using the issuer's public key.

In accordance with a further aspect of the present invention there is provided an embedded system that uses a target state header to validate uploaded files the system comprising: means to combine the files to be uploaded with the target state header; means to provide the files with the target state header to the embedded system; and verifying means to verify the target state header before the files are uploaded to the embedded system.

### Brief Description of the Drawings

The invention will now be described in greater detail with reference to the attached drawings where:
Figure 1 is a high level diagram of a system according to the present invention;
Figure 2 is a flow diagram of the transfer of data from a source to an embedded system according to a first aspect of the invention;
Figure 3 is a flow diagram of data flow from a source to an embedded system according to a second embodiment of the invention; and
Figure 4 represents a digital file with attached headers.

### Detailed Description of the Invention

According to one embodiment of the present invention target state information is added to digital data or an application file to be transferred from a source to an embedded system. The target state information includes identification information of the embedded system or systems for which the file is intended, e.g. a list of appropriate targets and/or revision levels. For example, a password file might have a list of eight product numbers, each with a software revision number. Another example of the identifier is an IP address assigned to a user by an Internet service provider or text name/password corresponding to the end user of an Internet based service.

In a second embodiment of the invention a further authentication measure is implemented wherein the entire file, including information in the header, is digitally signed using the issuer's private key such as a FIPS 186 signing key. The FIPS 186 establishes the algorithm for digital signature generation and verification. When a message is received the recipient may desire to verify that the message has not been altered in transit. Furthermore, the recipient may wish to be certain of the original user's identity. Both of these services can be provided by the digital signature algorithm (DSA). A digital signature is an electronic analogue of a written signature in that the digital signature can be used in proving to the recipient or a third party that the message was in fact, signed by the originator. Digital signatures may also be generated for stored data so that the integrity of the data and programs may be verified at a later time. According to the present invention the target upon receipt of the message verifies the target information and the digital signature, and only accepts up-loads that have been properly authorized and which have header information which matches the target state.

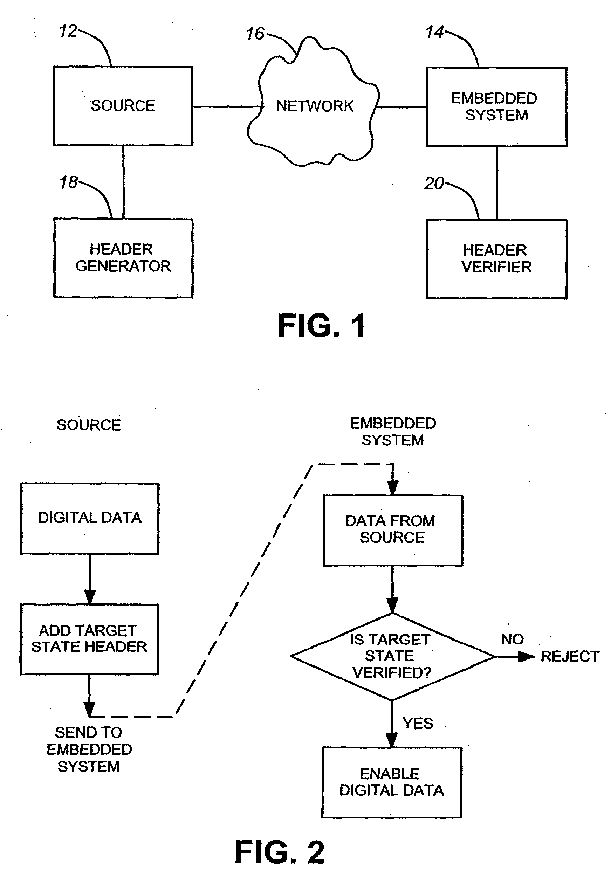

Figure 1 is a high level diagram of an exemplary system according to the invention. Source 12 downloads a file or other digital data to embedded system 14 through network 16. It is important in this implementation that the file or digital data downloaded by source 12 reaches the intended embedded system. Since the network can be accessed by other outside sources it is always possible for such an outside source to gain access to the embedded system using various hacker techniques.

To overcome this problem the digital data or file which is to be downloaded from source 12 is combined with a header generated by header generator 18. In one embodiment of the invention the header generator generates target state information as identified above. The header generator may also generate digital signature information that is also combined with the file or digital data as a second header appendage.

At the embedded system a header verifier 20 ensures that the target state information in the header corresponds to target information relating to the embedded system. In a second embodiment verifier 20 ensures that the digital signature is consistent with digital signature information associated with the target system.

Figure 2 is a flow diagram illustrating the flow of digital data from a source to an embedded system in which target state header information is combined with the digital data. As indicated, if the target state is not verified at the embedded system end the data is not uploaded to the embedded system.

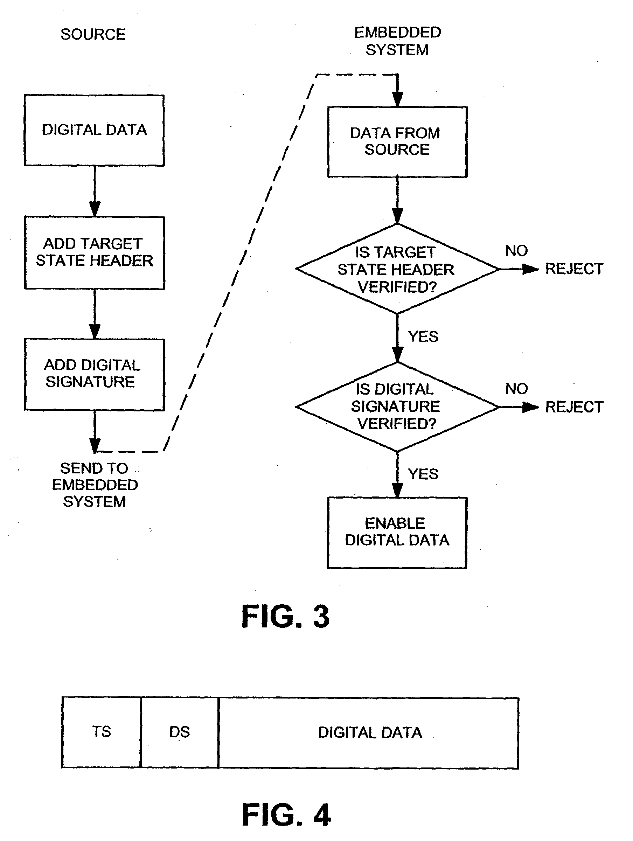

Figure 3 is a flow diagram illustrating the second embodiment of the invention in which a digital signature header is also added to the digital data. At the embedded system the target state header is first verified and if it corresponds to target information stored in the embedded system then the digital signature is verified. If both the target state header and the digital signature are verified then the digital data is enabled on the embedded system. Otherwise, the digital data or file is not uploaded.

Figure 4 is a representation of the data file together with the appended headers and in particular the target state and the digital signature headers. As discussed previously it is not essential that both these headers are attached to the file as it may be sufficient in certain applications to include only the target state information.

The present invention is intended to thwart security attacks that might target files destined for specific embedded systems. Additionally, the solution provided by the invention assures that files are only uploaded into appropriate targets. Prior art solutions do not combine these two security measures.

It is contemplated that this authentication system be used on the Internet for conducting a variety of transactions such as the purchase and download of new software or online banking. Another application is for the installation of software revisions in network nodes or wireless phones. Security is an ongoing concern and the present invention represents a stronger solution for effecting secure transfer of digital data then previously known.

Although particular embodiments of the invention have been described and illustrated it would be apparent to one skilled in the art that numerous modifications can be made to the basic concept. It is to be understood, however, that such modifications will fall within the full scope of the invention as defined by the appended claims.

## Claims

1. A method of providing digital data from a source system to an embedded system in a secure manner, comprising the steps of:
combining the data with header information including a target identifier corresponding to the embedded system;
providing the combined digital data with header information to the embedded system; and
verifying the target identifier before the embedded system is enabled to load the digital data.

2. The method as defined in claim 1 wherein the target identifier is a text name corresponding to an end user of an Internet based service.

3. The method as defined in claim 1 wherein said target identifier includes a revision level respecting said digital data.

4. A method of providing digital data from a source system to an embedded system in a secure manner, comprising the steps of:
combining the data with header information including a target identifier corresponding to the embedded system;
signing the combined digital data with header information with a digital signature corresponding to the source system, the digital signature being added to the header information
providing the combined digital data with header information to the embedded system; and
verifying the digital signature and the target identifier before the embedded system is enabled to load the digital data.

5. The method as defined in claim 4, wherein the step of signing the combined digital data with header information uses a private cryptographic key associated with the source system to generate the digital signature.

6. The method as defined in claim 5 wherein the step of verifying the digital signature uses a public key corresponding to the private cryptographic key.

7. An embedded system that uses a target state header to validate uploaded files the system comprising:
means to combine the files to be uploaded with the target state header;
means to provide the files with the target state header to the embedded system; and
verifying means to verify the target state header before the files are uploaded to the embedded system.

8. The embedded system as defined in claim 7 having means to provide a digital signature for use in verifying the files before uploading to the embedded system.

9. The embedded system as defined in claim 8 having public keying infrastructure for distributing public keying information to said embedded system.

10. The embedded system as defined in claim 9 having software for performing signature generation and verification.

11. The embedded system as defined in claim 7 for use in conducting transactions on the Internet.

12. The embedded system as defined in claim 11 wherein said transactions include the purchase and download of software.

13. The embedded system as defined in claim 11 wherein said transactions include online banking.

14. The embedded system as defined in claim 11 wherein said transactions include the installation of software revisions in network nodes.

15. The embedded system as defined in claim 11 wherein said network nodes include wireless telephones.
